# EUROPEAN PATENT APPLICATION

(11) **EP 4 831 944 A1**
(43) Date of publication of application: **28.10.2026**
(21) Application number: 25171937.3
(22) Date of filing: 23.04.2025
(51) Int. Cl.: G07C 1/10, G06Q 10/1091, H04W 4/02

(54) **MOBILE TIME CLOCK SYSTEM AND MOBILE TIME CLOCK METHOD**

(71) Applicant: Van, David, New Taipei City 220357 (TW)
(72) Inventor: Van, David, New Taipei City 220357 (TW)
(74) Representative: 2K Patent Partnerschaft mbB

(57) **Abstract**

A mobile time clock system (100) and method thereof are disclosed. An on-board recording device (110) installed on a vehicle obtains vehicle positioning information. A time clock application (121) controls a mobile device (120) held by a user to obtain a vehicle identifier through scanning a clocking barcode (bc1) on the vehicle and obtains the mobile positioning information detected by the mobile device (120). The server (130) retrieves a user identifier and records a clocking confirmation record when the position indicated by the mobile positioning information matches position indicated by the vehicle positioning information.

## Description

### BACKGROUND

### Technical Field

The present disclosure relates to a technology for personnel management, and more particularly, to a mobile time clock system and method.

### Description of Related Art

In the conventional freight transportation industry, the working hours of freight drivers are typically recorded using clocking systems, in order to ensure compliance with labor regulations and to serve as a basis for wage calculation and work monitoring. Traditional clocking systems usually rely on manual punch clocks or electronic clocking devices, and require drivers to clock in or out at delivery points or rest areas. However, due to various practical circumstances, freight drivers often encounter difficulties in clocking operations during actual work (for example, a driver may fail to clock in on time when rushing to hand off a delivery or handling other tasks). In addition, on-duty drivers may, for reasons such as inconvenience or unwillingness to report to work, improperly delegate the clocking operation to other drivers or staff members. Therefore, how to overcome the inconvenience of traditional clocking technologies and address clocking anomalies caused by fraudulent clock-ins (also known as "buddy punching") has become a technical issue that those skilled in the art urgently seek to resolve.

### SUMMARY

The primary objective of the present disclosure is to provide a mobile time clock system and method capable of addressing the inconvenience of conventional clocking technologies and solving the problem of abnormal clocking records caused by fraudulent clock-ins.

To achieve the above objective, the present disclosure provides a mobile time clock system, including an on-board recording device, a clocking barcode, time clock application and a server. The on-board recording device is disposed on a vehicle and configured to acquire vehicle positioning information from a positioning system on the vehicle. The clocking barcode is configured to be disposed on the vehicle and to record a vehicle identifier corresponding to the vehicle. The time clock application is installed on a mobile device held by a user and configured to acquire the vehicle identifier when the mobile device scans the clocking barcode, and to acquire mobile positioning information detected by the mobile device. The server is configured to receive the vehicle positioning information from the on-board recording device and receive the mobile positioning information and the vehicle identifier from the mobile device, acquire a user identifier of the user, and record a clocking confirmation record indicating a successful clocking of the user when the position indicated by the mobile positioning information matches the position indicated by the vehicle positioning information and the user identifier correctly matches the vehicle identifier.

To achieve the above objective, the present disclosure further provides a mobile time clock method including the following steps: acquiring vehicle positioning information of a vehicle by an on-board recording device; acquiring a vehicle identifier and detecting mobile positioning information by a mobile device held by a user through scanning a clocking barcode; receiving the vehicle positioning information, the mobile positioning information, and the vehicle identifier by a server; retrieving a user identifier of the user; and when a position indicated by the mobile positioning information matches a position indicated by the vehicle positioning information and the user identifier matches the vehicle identifier, recording a clocking confirmation record indicating a successful clocking of the user.

Compared with the related art, the present disclosure compares the position of the mobile device and the position of the vehicle to determine whether they match, and records the user's time clock only when the positions are determined to match. This approach effectively solves the inconvenience of conventional clocking technologies and the problem of abnormal clocking records caused by fraudulent clock-ins, thereby significantly reducing the likelihood of fraudulent clock-ins.

It is to be understood that both the foregoing general description and the following detailed description are by examples, and are intended to provide further explanation of the disclosure as claimed.

### BRIEF DESCRIPTION OF THE DRAWINGS

Aspects of the present invention are best understood from the following detailed description when read with the accompanying figures. It is noted that, in accordance with the standard practice in the industry, various features are not drawn to scale. In fact, the dimensions of the various features may be increased or reduced for clarity of discussion.

The features of the present invention are believed to be novel are set forth with particularity in the appended claims. The present disclosure itself, however, may be best understood by reference to the following detailed description of the present invention which describes an exemplary embodiment of the present invention, taken in conjunction with the accompanying drawings, in which:
FIG. 1 illustrates a block diagram of a mobile time clock system in accordance with some embodiments of the present disclosure.
FIG. 2 illustrates a schematic diagram showing the scanning of a clocking barcode in accordance with some embodiments of the present disclosure.
FIG. 3 illustrates a flowchart of a mobile time clock method in accordance with some embodiments of the present disclosure.
FIG. 4 illustrates a flowchart of additional steps included in the mobile time clock method in accordance with some embodiments of the present disclosure.

### DETAILED DESCRIPTION

In order to make the above objectives, features and advantages of the present disclosure more obvious and understandable, the specific embodiments listed in the drawings are described in detail below.

It will be appreciated that, although specific embodiments of the present disclosure are described herein for purposes of illustration, various modifications may be made without departing from the spirit and scope of the present disclosure.

In this specification and the patent application, unless the terms "only one", "single", etc. are used, expressions expressed in the singular form may be interpreted as the singular or the plural. Terms including ordinal numbers such as first, second, etc. are used only to describe various elements and should not be construed as limitations on these elements. These terms may only be used to distinguish one component from another component, or between each of multiple identical/similar components.

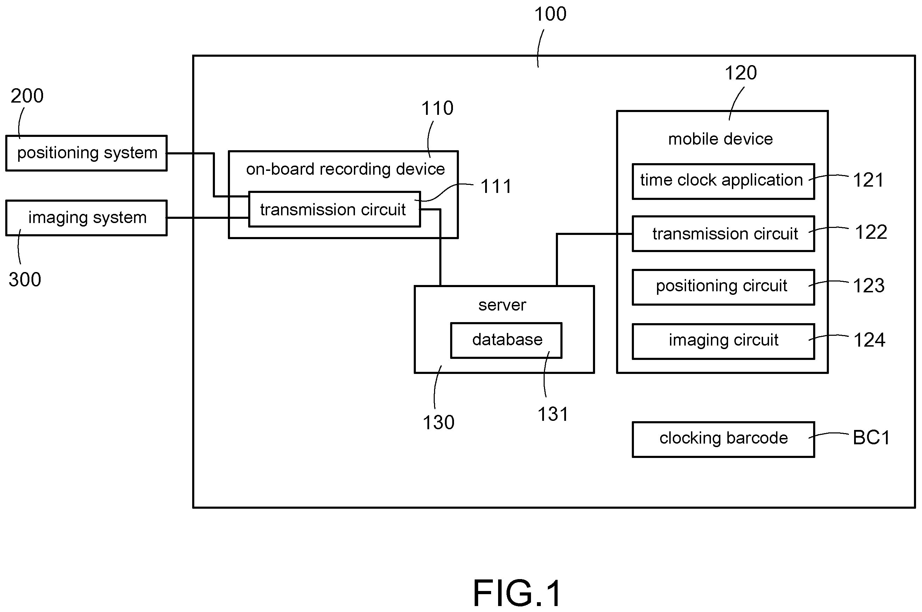

As shown in FIG. 1, in the present embodiment, the mobile time clock system 100 includes an on-board recording device 110, a time clock application 121, and a server 130, where the time clock application 121 is installed and executed on a mobile device 120. The server 130 of the present disclosure may be implemented as a combination of multiple servers and cloud platforms with different purposes, providers, and/or installation locations, and may optionally be configured to connect to the on-board recording device 110 and the mobile device 120 via the Internet, as needed.

In some embodiments, the on-board recording device 110 may be implemented as a device disposed on a vehicle for acquiring and recording various vehicle-related information (e.g., a device with an event data recorder (EDR), also known as a black box). In some embodiments, the on-board recording device 110 further includes a transmission circuit 111 and is connected to the server 130 via the transmission circuit 111 (e.g., a cellular network module). In some embodiments, the on-board recording device 110 is also connected to a positioning system 200 and an imaging system 300 via the transmission circuit 111. The positioning system 200 is configured to detect vehicle positioning information indicating the current position of the vehicle, and the imaging system 300 may include one or more cameras. Some cameras are directed toward the driver's seat to capture still images or video of the on-duty driver, while other cameras are directed outside the vehicle to capture environmental images or video (e.g., front view, rear view, blind spot view, etc.).

In some embodiments, the vehicle may be any type of vehicle that the user is assigned to drive, such as a delivery truck, cargo truck, or bus. The positioning system 200 may be implemented using any type of position-based positioning system, such as a Global Positioning System (GPS) or a Differential Global Positioning System (DGPS). The imaging system 300 may be implemented using any type of in-vehicle imaging system, such as a driver monitoring system, an in-cabin monitoring system, or an in-car surveillance system. It should be noted that the user mentioned above refers to the on-duty driver who is authorized to drive the vehicle and is carrying the mobile device 120.

In the present embodiment, the on-board recording device 110 is disposed on the vehicle and obtains vehicle positioning information from the vehicle's positioning system 200. In some embodiments, the on-board recording device 110 may also obtain images of the vehicle's driver captured by the imaging system 300, which can be used for gesture recognition as described in later paragraphs. In some embodiments, the vehicle positioning information includes global positioning system (GPS) data indicating the vehicle's current position (e.g., latitude 25.34° N and longitude 121.56° E).

In some embodiments, the primary power source for the on-board recording device 110 and the positioning system 200 is the vehicle itself (e.g., through electrical connection to a rechargeable battery such as a starter battery or a power battery via the vehicle ignition switch). This allows the on-board recording device 110 and the positioning system 200 to power on and off along with the vehicle ignition. In some embodiments, the on-board recording device 110 may transmit the acquired vehicle positioning information or images to the server 130 (e.g., to a vehicle database) via the transmission circuit 111 for subsequent position comparison. The on-board recording device 110 may periodically or non-periodically acquire vehicle positioning information detected by the positioning system 200 and upload it to the server 130. In other words, once the positioning system 200 is activated (i.e., while the rechargeable battery continues to supply power), the on-board recording device 110 continuously acquires and uploads vehicle positioning information to the server 130. Notably, when the vehicle is shut off and power supply stops, the upload process is abruptly terminated, possibly preventing the final positioning information from being saved or transmitted. To address this issue, the vehicle's rechargeable battery may continue to supply a small amount of power after shutdown, or the on-board recording device 110 may be equipped with a low-capacity rechargeable battery or a supercapacitor as a backup power source to temporarily support operation. The on-board recording device 110 may store the last acquired vehicle positioning information from the positioning system 200 prior to shut down and then transmit it to the server 130 via the transmission circuit 111 before automatically powering down. This ensures that the final positioning information before shutdown is successfully stored or uploaded. In some embodiments, if the vehicle is restarted but new positioning information is not yet available (e.g., due to a delay in establishing satellite connectivity), the on-board recording device 110 can upload the previously stored vehicle positioning information to the server 130 for use in time clock position matching. This approach enables immediate time clocking upon vehicle startup without waiting for satellite lock.

In some embodiments, the mobile time clock system 100 may further include a clocking barcode BC1, which may be placed near the driver's seat in a location convenient for scanning. Combined with the requirement that the vehicle must be powered on before clocking is allowed, this arrangement further ensures that the user is physically present in the driver's seat and has control of the vehicle (e.g., by possessing the correct key to start the vehicle).

In some embodiments, the time clock application 121 may be provided by the company that owns the vehicle (e.g., a freight company in the case of a truck) or a third-party company that offers mobile clocking services. The user (i.e., a driver employed or contracted by the company) can download and install the application from the server 130 (e.g., via an official website or app store) to their own mobile device 120. Once the time clock application 121 is launched on the mobile device 120, it can connect to the server 130 through a transmission circuit 122 (e.g., a cellular network module). In some embodiments, after establishing the connection with the server 130, the mobile device 120 can access a clocking interface provided by the server, which the user can operate through a human-machine interface (HMI) of the mobile device 120 (e.g., a touchscreen) to complete the clocking process. In some embodiments, the user logs into the application using an assigned account, and the time clock application 121 obtains the user's identifier (e.g., a string that identifies the user who is clocking in) based on the login credentials.

In some embodiments, the time clock application 121 may be a software application developed by a freight company or a third-party provider of mobile time clock services. The mobile device 120 may be implemented using any type of smart mobile device (e.g., a smartphone or tablet). The transmission circuit 111 and the transmission circuit 122 may be implemented using any number and type of wireless transmission circuits (e.g., cellular network, Wi-Fi, near field communication (NFC), radio frequency (RF), Zigbee, Bluetooth Low Energy (BLE)) or wired transmission circuits (e.g., Controller Area Network (CAN Bus) or Ethernet), depending on the requirements.

As shown in FIG. 1, in some embodiments, the mobile device 120 further includes an imaging circuit 124. The user can use the imaging circuit 124 of the mobile device 120 to scan the vehicle-specific clocking barcode BC1, thereby indicating the intention to operate the vehicle and initiating the clocking process. In some embodiments, the clocking barcode BC1 may be printed on a piece of paper placed in the vehicle or displayed on a screen within the vehicle for scanning by the mobile device 120, and the content of the barcode remains constant for each clock-in and clock-out. The clocking barcode BC1 may be implemented as a one-dimensional or two-dimensional barcode and contains a vehicle identifier corresponding to the specific vehicle (e.g., a string that identifies the vehicle). In some embodiments, after scanning the barcode BC1, the time clock application 121 decodes the barcode image to retrieve the vehicle identifier.

In some embodiments, the mobile device 120 further includes a positioning circuit 123 configured to detect the current mobile positioning information of the mobile device 120. The positioning circuit 123 may be implemented using any type of position-detection circuit (e.g., one that supports GPS or DGPS). The mobile positioning information may include coordinates corresponding to the current position of the mobile device 120 (e.g., 25.012° N, 121.477° E). In some embodiments, the time clock application 121 begins acquiring the mobile positioning information detected by the positioning circuit 123 when the mobile device 120 scans the vehicle's clocking barcode BC1. The mobile device 120 may then transmit the acquired mobile positioning information to the server 130 via the transmission circuit 122 for subsequent position comparison, as described in later sections. In some embodiments, the time clock application 121 may periodically or non-periodically acquire the mobile positioning information and transmit it to the server 130. The time clock application 121 may also simultaneously transmit the mobile positioning information, user identifier, and vehicle identifier to the server 130 for comparison.

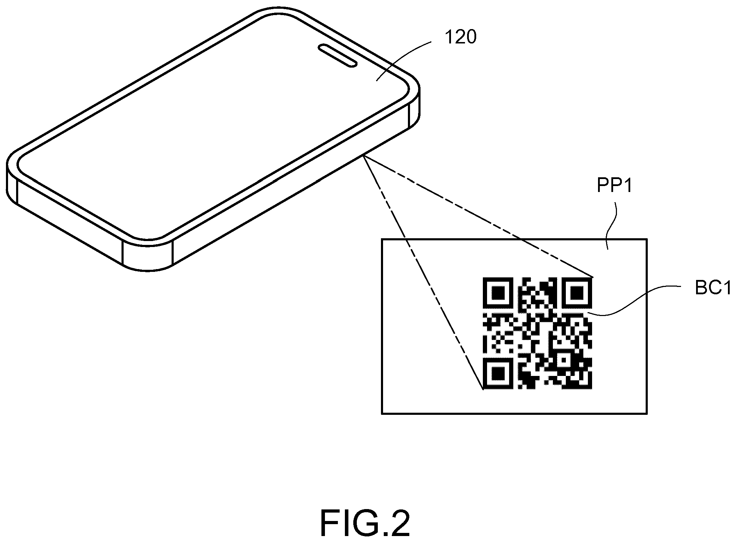

The following is an example to illustrate the scanning of the clocking barcode BC1. Referring to FIG. 2, as shown, the clocking barcode BC1 is a two-dimensional barcode printed on a sheet of paper PP1. In some embodiments, the clocking barcode BC1 stores a fixed vehicle identifier corresponding to the vehicle, and the sheet PP1 is affixed near the driver's seat at any suitable position. Thus, the user can use their mobile device 120 to scan the barcode BC1 on the sheet PP1, allowing the mobile device 120 to decode the barcode and retrieve the vehicle identifier. Furthermore, when the time clock application 121 detects that the mobile device 120 has scanned the clocking barcode BC1 and obtained the vehicle identifier, it starts acquiring the mobile positioning information detected by the positioning circuit 123 of the mobile device 120 and uploads the information to the server 130 until a stop-upload condition is met (e.g., the user's off-duty time is reached or a specific button in the application is triggered).

In some embodiments, the mobile device 120 may also transmit the user's user identifier and the vehicle's vehicle identifier to the server 130 via the transmission circuit 122. In some embodiments, when the mobile device 120 runs the time clock application 121, the application allows the user to enter their login credentials (e.g., username and password) to log in and then perform the clocking operation as the authenticated user (e.g., by confirming clock-in). The application 121 obtains the corresponding user identifier based on the login credentials. During the clocking process, the mobile device 120 sends the user identifier and vehicle identifier to the server 130 for subsequent identifier matching, as will be described in later sections. In some embodiments, the application 121 may be preconfigured with allowable user information and the corresponding user identifiers. Once the user logs in using the application 121, the application generates the corresponding user identifier based on the input user information.

In some embodiments, the server 130 may be implemented as any type of server managed by a freight company or a third-party provider of mobile clocking services (e.g., a cloud server, virtual server, or rack-mounted server). As shown in FIG. 1, in some embodiments, the server 130 includes a database 131 that stores verification results of the user's clocking (e.g., clocking confirmation records or failed verification records, as described in later sections). The database 131 may be implemented using any type of storage-enabled database, such as a relational database management system (RDBMS), an object-oriented database management system (OODBMS), or a vector database. In some embodiments, the database 131 also stores a shift table. The shift table records multiple work periods of the freight company and the corresponding assignment relationships between the on-duty drivers and their assigned vehicles in each work period. The shift table is also used for identifier matching in later stages. In some embodiments, the shift table includes assigned user identifiers for on-duty drivers and corresponding assigned vehicle identifiers for the on-duty vehicles. The following example, shown in Table 1, illustrates the shift mapping table.

**Table 1:**

| Work Period | Assigned Driver Identifiers | Assigned Vehicle Identifiers |
|---|---|---|
| 10:00~11:00 | 110 | 210 |
| 11:00~12:00 | 190 | 260 |
| · | · | · |
| · | · | · |
| · | · | · |
| 20:00~21:00 | 170 | 280 |

As shown in Table 1, the shift table indicates that during the 10:00-11:00 time slot, the assigned user identifier and the assigned vehicle identifier (i.e., the vehicle assigned to the on-duty driver) are 110 and 210, respectively. For the 11:00-12:00 time slot, the user identifier and corresponding vehicle identifier are 190 and 260, respectively, and so on.

As shown in FIG. 1, in some embodiments, the imaging circuit 124 of the mobile device 120 may also be used to capture images of the user holding the mobile device 120 or of specific objects (e.g., the vehicle's dashboard), which can be used for gesture recognition as described in later paragraphs. The imaging circuit 124 may be implemented using any type of image capture circuitry, such as a barcode scanning circuit, optical imaging circuit, infrared imaging circuit, or 3D imaging circuit.

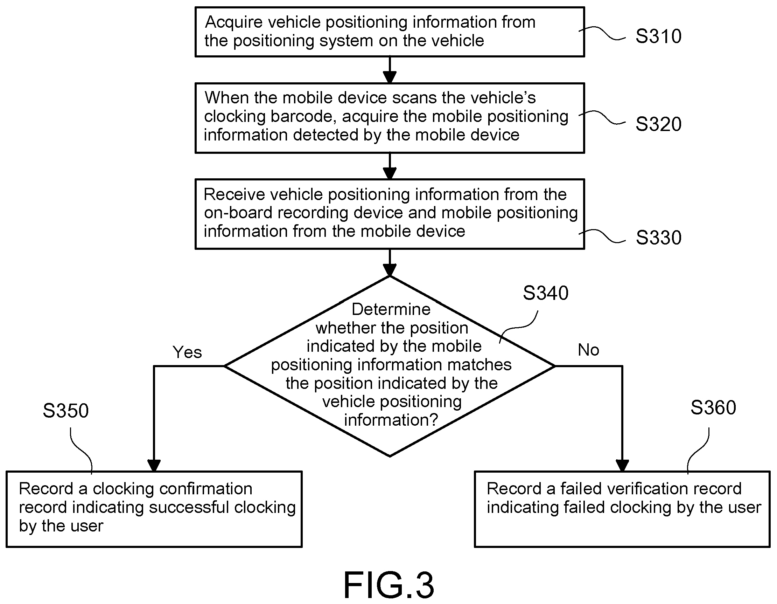

Referring also to FIG. 3, the mobile time clock method is applicable to the mobile time clock system 100 shown in FIG. 1. As illustrated in FIG. 3, the method includes steps S310 to S360.

First, in step S310, the on-board recording device 110 obtains vehicle positioning information from the positioning system 200 installed in the vehicle. In step S320, the time clock application 121 obtains the mobile positioning information detected by the mobile device 120 when the mobile device 120 scans the vehicle's clocking barcode BC1.

In step S330, the server 130 receives the vehicle positioning information from the on-board recording device 110 and the mobile positioning information from the mobile device 120. Specifically, both the on-board recording device 110 and the mobile device 120 may periodically or non-periodically upload their respective positioning information to the server 130. In some embodiments, the on-board recording device 110 and the mobile device 120 may upload their data in real-time to the server 130 (e.g., uploading to an attendance database and a vehicle database, respectively), and another server 130 (e.g., an attendance management server) retrieves the vehicle and mobile positioning information from those databases.

In step S340, the server 130 determines whether the position indicated by the mobile positioning information matches the position indicated by the vehicle positioning information. If the positions match, the server 130 proceeds to step S350. Otherwise, if the positions do not match, the server 130 proceeds to step S360. Specifically, the user connects to the server 130 using the time clock application 121 on the mobile device 120 to perform clocking, and this action can be executed even if the user is not physically inside or near the vehicle. Therefore, by comparing the mobile positioning information with the vehicle positioning information during the clocking process, the system can verify whether the user is in or near the vehicle at the time of clocking. Given that users are unlikely to lend their personal mobile devices to others for extended periods, the disclosed technical solution effectively prevents fraudulent clocking, such as buddy punching.

In some embodiments, the on-board recording device 110 and the mobile device 120 may continuously detect and upload vehicle positioning information and mobile positioning information to the server 130 over a predefined period (e.g., 5 minutes, 30 minutes, or 1 hour) during the user's driving session. When multiple sets of vehicle positioning information and mobile positioning information have been uploaded, the server 130 may compare the sets of vehicle positioning information with the sets of corresponding mobile positioning information taken at a similar time to determine whether the movement trajectories of the vehicle and the user match. If the movement trajectories match, the server 130 proceeds to step S350. Otherwise, if they do not match, the server 130 proceeds to step S360. By continuously comparing the movement trajectories of the vehicle and the user during driving, the mobile time clock system 100 ensures that the user is carrying the mobile device 120 throughout the driving period. Given that users are unlikely to lend their personal mobile devices to others for extended periods, the above technical approach can prevent malicious actors from using the on-duty driver's mobile device to clock in or out, returning it to the driver, and then improperly operating the vehicle on their behalf.

In some embodiments, the time clock application 121 may continuously acquire and upload the mobile positioning information of the mobile device 120 during the user's driving period. After the server 130 determines that the movement trajectory of the vehicle matches the movement trajectory of the user for a certain number of instances or duration, the frequency of acquiring and uploading mobile positioning information to the server 130 may be reduced. This helps to effectively reduce the power consumption of the mobile device 120, thereby improving the user experience when using the time clock application 121 on the mobile device 120.

In some embodiments, the database 131 of the server 130 may store a predefined permissible error. The server 130 may calculate the distance between the position indicated by the mobile positioning information and the position indicated by the vehicle positioning information, and determine whether this distance is within the permissible error. If the distance is less than the permissible error, the server 130 considers the two positions to match. Conversely, if the distance exceeds the permissible error, the server 130 considers the positions to be mismatched. Through this technique, the mobile time clock system 100 can prevent position mismatches caused by positioning inaccuracies between the positioning circuit 123 of the mobile device 120 and the positioning system 200 of the on-board recording device 110.

In step S350, the server 130 records a clocking confirmation record indicating that the user has successfully clocked in or out. In some embodiments, the clocking confirmation record includes the user's clocking time and a clocking verification result indicating successful clocking. The clocking time may be the time when the user completed the clocking through the time clock application. In some embodiments, the server 130 stores the clocking confirmation record in the database 131.

In step S360, the server 130 records a failed verification record indicating failed clocking by the user. In some embodiments, this failed verification record includes the user's clocking time and a clocking verification result indicating clocking failure. In some embodiments, when recording the failed verification record, the server 130 generates a warning message and sends it to a monitoring device used by the freight company's management personnel (e.g., a human resources manager). The warning message indicates that the user failed to clock in or out at a specific time (e.g., due to an incorrect or buddy punching). The monitoring device may be any processing device (e.g., a mobile phone, desktop computer, or tablet). In some embodiments, the server 130 also stores the failed verification record in the database 131.

In some embodiments, if the earlier-determined result of "whether the vehicle's movement trajectory matches the user's movement trajectory" is positive, the server 130 sets the clocking verification result as indicating successful verification. If the result indicates a mismatch, the server 130 sets the clocking verification result as indicating failed verification.

Through the above steps, the present disclosure compares the current vehicle positioning information and the current mobile positioning information of the user to complete the first stage of buddy punching detection. Furthermore, since the user's mobile device 120 typically contains various personal and private data, users generally do not lend their devices to others. Therefore, by strictly monitoring whether the current position of the mobile device 120 overlaps with the position of the vehicle, this disclosure significantly enhances the ability to prevent fraudulent or buddy punching. Additionally, by allowing users to directly scan the clocking barcode BC1 using their own mobile device 120, this solution greatly improves both the convenience and efficiency of the clocking process.

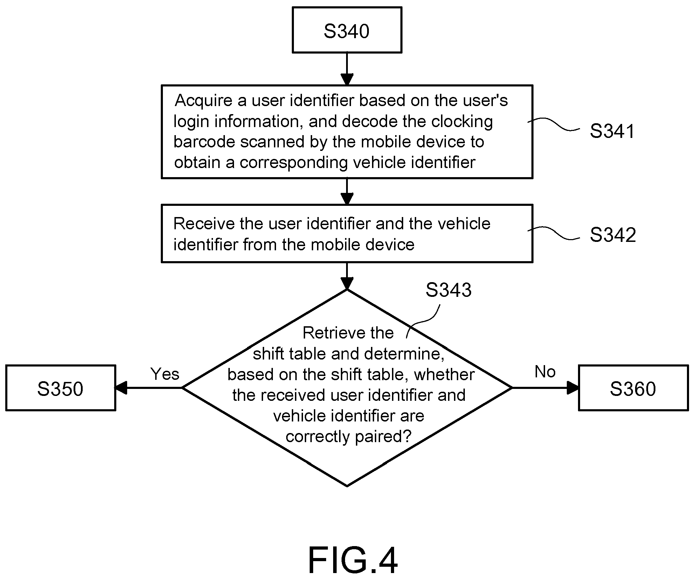

Referring also to FIG. 4, the mobile time clock method may further include additional steps S341 to S343, as illustrated in the flowchart of FIG. 4. When the position indicated by the mobile positioning information matches the position indicated by the vehicle positioning information, steps S341 to S343 may be executed.

In step S341, the time clock application 121 obtains a user identifier based on the user's login information, and decodes the clocking barcode BC1 scanned by the mobile device 120 to acquire the corresponding vehicle identifier. In step S342, the server 130 receives the user identifier and the vehicle identifier from the mobile device 120.

In step S343, the server 130 retrieves the shift table and determines whether the received user identifier and vehicle identifier are correctly paired based on the shift table. If the pairing of the received user identifier and the received vehicle identifier matches the shift table, it indicates that the user performing the clocking is the designated on-duty driver for the vehicle during that time period, and the server 130 proceeds to step S350 (i.e., recording the clocking confirmation record). Conversely, if the pairing of the received user identifier and the received vehicle identifier does not match the shift table, it may indicate that the user is not the designated on-duty driver of the vehicle during that time slot, and the server 130 proceeds to step S360 (i.e., recording the failed verification record).

For example, referring to the shift table shown in Table 1: suppose the user clocks in at 10:00 a.m. and the user identifier is 170. Based on the shift table, the server 130 determines that the assigned vehicle identifier 210 should be paired with the assigned user identifier 110. Therefore, the server 130 determines that the user identifier and vehicle identifier are mismatched and records a failed verification record indicating that failed clocking in or out by the user.

Through the above steps, the present disclosure can further utilize the shift table to determine whether the current vehicle and the user holding the mobile device 120 are correctly matched, thereby implementing a second stage of buddy punching detection. Accordingly, this second stage of buddy punching detection further enhances the effectiveness of preventing fraudulent clock-ins.

In some embodiments, the server 130 stores a plurality of verification test information and corresponding answer information. In some embodiments, based on system settings, the server 130 may select one of multiple sets of the verification test information at a designated or random time and transmit it to the mobile device 120. The mobile device 120 then displays the selected verification test information for the user to view. After viewing the verification test information, the user operates the mobile device 120 to input a corresponding response. Once the mobile device 120 receives the user's reply information, the server 130 determines whether the reply information matches the answer information corresponding to the verification test information. If the reply information matches the answer information, the server 130 records the aforementioned clocking confirmation record. Otherwise, when the reply information does not match the answer information, the server 130 records aforementioned failed verification record.

In some embodiments, the verification test information includes at least one of: an anti-fraud question, information indicating capturing of a specific object, information indicating capturing of a specific gesture, and information indicating performing a specific operation on the vehicle. The corresponding answer information may include at least one of: an anti-fraud answer corresponding to the verification test information, information indicating the specific object, information indicating the specific gesture, and information indicating the specific vehicle operation.

For example, suppose the verification test information displayed on the mobile device 120 is an anti-fraud question (e.g., "Please enter your birthday," "employee ID," "years of service," "most recent clock-out time," "company color," or a freight route/knowledge question). The user may input a reply information using, for example, the touchscreen of the mobile device 120. The device 120 then determines whether the input reply information matches the expected answer information corresponding to the verification test information (e.g., whether the answer matches the correct birthday, employee ID, years of service, recent off-duty time, company color, or freight route/knowledge answer).

In a second example, suppose the verification test information displayed on the mobile device 120 instructs the user to capture a specific object (e.g., the dashboard odometer, an ID badge, a key, or the clocking barcode). The user may use the imaging circuit 124 to capture the photo. The mobile device 120 then treats the captured image as the reply information and may apply an image recognition algorithm (e.g., a convolutional neural network) to recognize the shown in the image and determine whether the image corresponds to the expected object, such as the odometer, ID badge, key, or the clocking barcode.

In a third example, suppose the verification test information displayed on the mobile device 120 instructs the user to perform a specific gesture (e.g., a thumbs-up gesture). The user may use the imaging circuit 124 to capture image of the gesture. The mobile device 120 then uses the captured image as the reply information and may apply any image recognition algorithm for gesture recognition to determine whether the reply information matches the expected answer information corresponding to the verification test information (e.g., whether the reply information is recognized as a thumbs-up gesture).

In a fourth example, suppose the mobile device 120 displays verification test information instructing the user to perform a specific operation on the vehicle (e.g., turning on the right turn signal or the high beams). The user then performs the instructed action. The on-board recording device 110 receives a corresponding vehicle operation signal from the vehicle system (e.g., a signal indicating that the right turn signal or high beams have been activated) and transmits this signal to the mobile device 120 via the server 130. The mobile device 120 then uses the received vehicle signal as the input reply information and determines whether the reply information matches the expected answer information corresponding to the verification test information (e.g., whether the reply information is recognized as activation of the right turn signal or high beams).

In some embodiments, the third stage of buddy punching detection may be implemented by having the server 130 transmit verification test information to the mobile device 120, receive the user's inputted reply information from the mobile device 120, and then determine whether the reply information matches the corresponding answer information. Based on this determination, the server 130 records either a successful verification of clocking confirmation record or a failed verification record.

Based on the above, the present disclosure introduces additional verification tests to implement a third stage of buddy punching detection. This third stage increases the difficulty for users to act negligently while on duty. Furthermore, supervisors may use their monitoring devices to download the failed verification records stored in the database 131 via the server 130 at any time, allowing them to follow up with the on-duty driver at the time of the failed clocking to investigate potential buddy punching or unanticipated errors.

It is noteworthy that the present disclosure does not limit the execution order of the above three stages of buddy punching detection. The execution sequence may be adjusted as needed. In one example, the mobile time clock system 100 may perform the third stage first, followed by the first and second stages. In another example, all three stages may be executed simultaneously.

In some embodiments, each component/circuit of the mobile time clock system 100 may include one or more subcomponents/subcircuits that work together to realize the complete or advanced functions of the respective components/circuits. For example, if a component/circuit performs a function through three steps or operations, three subcomponents/subcircuits may be provided to respectively carry out those three steps or operations. In another example, if a certain function of a component/circuit can be achieved through two implementation approaches, two subcomponents/subcircuits may be configured to respectively perform the steps or operations of each approach.

As will become apparent to the skilled person when studying the above disclosure in conjunction with the appended claims, the appended claims may also be understood as multiple dependent although these have been drafted as single dependent claims. Hence, e.g., the expression 'The mobile time clock system as claimed in claim l' is to be understood also in the sense of 'The mobile time clock system' as claimed in any of the preceding claims' or 'The mobile time clock method as claimed in claim 8' is to be understood also in the sense of 'The mobile time clock method' as claimed in any of claims 8 and following' or with reference to any combination of antecedent claims as far as disclosed in the above disclosure.

In summary, the mobile time clock system proposed by the present disclosure uses an automated time clock application to perform clock-ins. When the application is launched, it uploads the positions of both the mobile device and the vehicle to perform position matching, thereby confirming that the on-duty driver has completed the clocking upon successful matching. This approach resolves the inconvenience of traditional time clock systems and prevents anomalies in clocking records caused by buddy punching. Furthermore, the system also performs matching between the identifiers of the mobile device and the vehicle, which enhances the difficulty of buddy punching and improves prevention effectiveness. Additionally, the system can periodically or randomly require the on-duty driver to respond to various questions or instructions, thereby deterring driver negligence during work hours.

## Claims

1. A mobile time clock system (100), comprising:
an on-board recording device (110), disposed on a vehicle and configured to acquire vehicle positioning information from a positioning system (200) on the vehicle;
a clocking barcode (bc1), configured to be disposed on the vehicle and to record a vehicle identifier corresponding to the vehicle;
a time clock application (121), installed on a mobile device (120) held by a user, and configured to acquire the vehicle identifier when the mobile device (120) scans the clocking barcode (bc1), and to acquire mobile positioning information detected by the mobile device (120);
a server (130), configured to:
receive the vehicle positioning information from the on-board recording device (110), and receive the mobile positioning information and the vehicle identifier from the mobile device (120);
retrieve a user identifier of the user; and
record a clocking confirmation record indicating a successful clocking of the user when a position indicated by the mobile positioning information matches a position indicated by the vehicle positioning information and the user identifier matches the vehicle identifier.

2. The mobile time clock system (100) according to claim 1, wherein the clocking barcode (bc1) is a two-dimensional barcode and is printed on a sheet of paper (PP1) configured to be placed on the vehicle.

3. The mobile time clock system (100) according to claim 1 or claim 2, wherein the clocking confirmation record comprises a clocking time of the user and a clocking verification result indicating successful clocking, wherein the server (130) is further configured to:
acquire multiple sets of vehicle positioning information from the on-board recording device (110) within a preset period after the successful clocking;
acquire multiple sets of mobile positioning information from the mobile device (120) within the preset period; and
when the multiple sets of vehicle positioning information match the multiple sets of mobile positioning information, set the clocking verification result to indicate a successful verification.

4. The mobile time clock system (100) according to any of claims 1-3, wherein the server (130) has a database (131), the database (131) being configured to store a shift table, wherein the server (130) is further configured to:
receive the user identifier from the mobile device (120);
when a pairing of the user identifier and the vehicle identifier matches the shift table, record the clocking confirmation record; and
when the pairing of the user identifier and the vehicle identifier does not match the shift table, record a failed verification record indicating a failed clocking by the user.

5. The mobile time clock system (100) according to claim 4, wherein the shift table is configured to record multiple work periods and, for each work period, multiple pairings of assigned user identifiers and assigned vehicle identifiers, wherein the server (130) is further configured to:
select the work period that matches a current time; and
record the clocking confirmation record or the failed verification record based on a comparison result between the pairing of the user identifier and the vehicle identifier and the pairings of assigned user identifiers and assigned vehicle identifiers.

6. The mobile time clock system (100) according to any of claims 1-5, wherein the server (130) is further configured to transmit a verification test information to the mobile device (120), receive reply information input from the mobile device (120), when the reply information matches an answer information corresponding to the verification test information, record the clocking confirmation record, and when the reply information does not match the answer information, record a failed verification record indicating a failed clocking by the user;
wherein the verification test information comprises at least one of: an anti-fraud question, information indicating capturing of a specific object, information indicating capturing of a specific gesture, and information indicating performing a specific operation on the vehicle; and wherein the multiple answer information comprises at least one of: an anti-fraud answer corresponding to the verification test information, information indicating the specific object, information indicating the specific gesture, and information indicating the specific vehicle operation.

7. The mobile time clock system (100) according to any of claims 1-6, wherein the on-board recording device (110) is further configured to store the vehicle positioning information when the vehicle is turned off, and to transmit the vehicle positioning information to the server (130) when the vehicle is next started, wherein the on-board recording device (110) comprises a low-capacity rechargeable battery or a supercapacitor, or is connected to a starter battery or a power battery of the vehicle to temporarily obtain operating power when the vehicle is turned off.

8. A mobile time clock method, comprising:
acquiring vehicle positioning information of a vehicle by an on-board recording device (110);
acquiring a vehicle identifier and detecting mobile positioning information by a mobile device (120) held by a user through scanning a clocking barcode (bc1);
receiving the vehicle positioning information, the mobile positioning information, and the vehicle identifier by a server (130);
retrieving a user identifier of the user; and
when a position indicated by the mobile positioning information matches a position indicated by the vehicle positioning information and the user identifier matches the vehicle identifier, recording a clocking confirmation record indicating a successful clocking of the user.

9. The mobile time clock method according to claim 8, wherein the clocking confirmation record comprises a clocking time of the user and a clocking verification result indicating a successful clocking, and the mobile time clock method further comprises:
acquiring multiple sets of vehicle positioning information from the on-board recording device (110) within a preset period after a successful clocking;
acquiring multiple sets of mobile positioning information from the mobile device (120) within the preset period; and
when the multiple sets of vehicle positioning information match the multiple sets of mobile positioning information, setting the clocking verification result to indicate a successful verification.

10. The mobile time clock method according to claim 8 or claim 9, further comprising:
acquiring a shift table by the server (130);
when a first pairing of the user identifier and the vehicle identifier matches the shift table, recording the clocking confirmation record; and
when the first pairing does not match the shift table, recording a failed verification record indicating a failed clocking by the user.

11. The mobile time clock method according to claim 10, wherein the shift table is configured to record multiple work periods and, for each work period, multiple second pairings of assigned user identifiers and vehicle identifiers, and the mobile time clock method further comprises:
selecting the work period matching a current time by the server (130); and
recording the clocking confirmation record or the failed verification record based on a comparison result between the first pairing and the second pairings.

12. The mobile time clock method according to claim 10, wherein the position indicated by the mobile positioning information matching the position indicated by the vehicle positioning information comprises that a distance between the position indicated by the mobile positioning information and the position indicated by the vehicle positioning information is less than a permissible error.

13. The mobile time clock method according to any of claims 8-12, further comprising:
transmitting verification test information to the mobile device (120) by the server (130);
receiving reply information from the mobile device (120);
when the reply information matches answer information corresponding to the verification test information, recording the clocking confirmation record; and
when the reply information does not match the answer information, recording a failed verification record indicating a failed clocking by the user.

14. The mobile time clock method according to claim 13, wherein the verification test information comprises at least one of: an anti-fraud question, information indicating capturing of a specific object, information indicating capturing of a specific gesture, and information indicating a specific vehicle operation; and wherein the answer information comprises at least one of: a response to the anti-fraud question, information indicating the specific object, information indicating the specific gesture, and information indicating the specific vehicle operation.

15. The mobile time clock method according to any of claims 8-14, further comprising:
storing the vehicle positioning information by the on-board recording device (110) when the vehicle is turned off; and
when the vehicle is next started, transmitting the stored vehicle positioning information to the server (130), wherein a power source of the on-board recording device (110) comprises a rechargeable battery of the vehicle.
